(19) **Europäisches Patentamt**
**European Patent Office**
**Office européen des brevets**

(11) **EP 1 984 770 B1**

(12) **EUROPÄISCHE PATENTSCHRIFT**

(45) Veröffentlichungstag und Bekanntmachung des Hinweises auf die Patenterteilung:
**09.09.2009  Patentblatt 2009/37**

(51) Int Cl.:
**G02B 21/00** (2006.01)    **G01B 11/25** (2006.01)

(21) Anmeldenummer: **07712172.1**

(86) Internationale Anmeldenummer:
**PCT/EP2007/051212**

(22) Anmeldetag: **08.02.2007**

(87) Internationale Veröffentlichungsnummer:
**WO 2007/090865 (16.08.2007 Gazette 2007/33)**

(54) **VERFAHREN UND ANORDNUNG ZUR SCHNELLEN UND ROBUSTEN, CHROMATISCH-KONFOKALEN 3D-MESSTECHNIK**

METHOD AND ARRANGEMENT FOR A RAPID AND ROBUST CHROMATIC CONFOCAL 3D MEASUREMENT TECHNIQUE

PROCÉDÉ ET DISPOSITIF CONÇUS POUR UNE TECHNIQUE CONFOCALE CHROMATIQUE DE MESURE 3D RAPIDE ET ROBUSTE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **08.02.2006   DE 102006007170**

(43) Veröffentlichungstag der Anmeldung:
**29.10.2008   Patentblatt 2008/44**

(73) Patentinhaber: **Sirona Dental Systems GmbH 64625 Bensheim (DE)**

(72) Erfinder:
• **KÖRNER, Klaus 15566 Schöneiche (DE)**
• **KOHLER, Christian 74193 Schwaigern (DE)**
• **OSTEN, Wolfgang 70569 Stuttgart (DE)**

• **PAPASTATHOPOULOS, Evangelos 07743 Jena (DE)**

(74) Vertreter: **Sommer, Peter Sommer Patentanwalt und European Patent and Trademark Attorney Augustaanlage 32 68165 Mannheim (DE)**

(56) Entgegenhaltungen:
DE-A1- 10 321 885        DE-A1- 10 321 895
DE-A1- 19 918 689

• RUPRECHT A K ET AL: "Chromatic confocal detection for high-speed microtopography measurements" PROCEEDINGS OF THE SPIE - THE INTERNATIONAL SOCIETY FOR OPTICAL ENGINEERING SPIE-INT. SOC. OPT. ENG USA, Bd. 5302, Nr. 1, 2003, Seiten 53-60, XP009084987 ISSN: 0277-786X in der Anmeldung erwähnt

EP 1 984 770 B1

**Beschreibung**

Stand der Technik

Die konfokale Mikroskopie wurde von Marvin Minski, s. a. Patentschrift US 3,013,467 vom 19. Dezember 1961, vorgeschlagen.

Die chromatisch-konfokale Technik stellt eine Möglichkeit dar, eine Durchfokussierung ohne mechanisch bewegte Teile zu realisieren und damit die Messzeit in der Regel deutlich zu verringern, welche von G. Molesini 1983 in Verbindung mit einem Spektrometer vorgeschlagen wurde, s. a. GB 2144537 und DE 3428593 C2. Ein Beispiel für eine erfolgreiche Applikation des chromatisch-konfokalen Ansatzes wird von H.J. Tiziani und H.-M. Uhde im Fachartikel "Three-dimensional image sensing by chromatic confocal microscopy" in Applied Optics, Vol. 33, No. 1. April 1994, auf den Seiten 1838 bis 1843 dargestellt. Die spektrale Analyse erfolgt hierbei mit drei Farbfiltern. Damit sind der erreichbare Tiefenmessbereich und die Tiefenauflösung jedoch begrenzt.

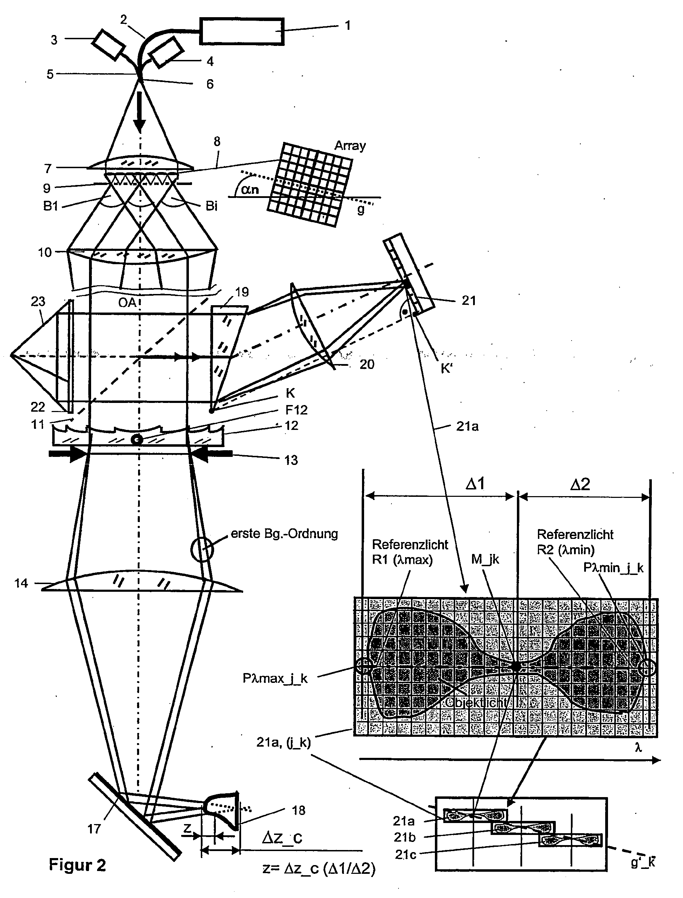

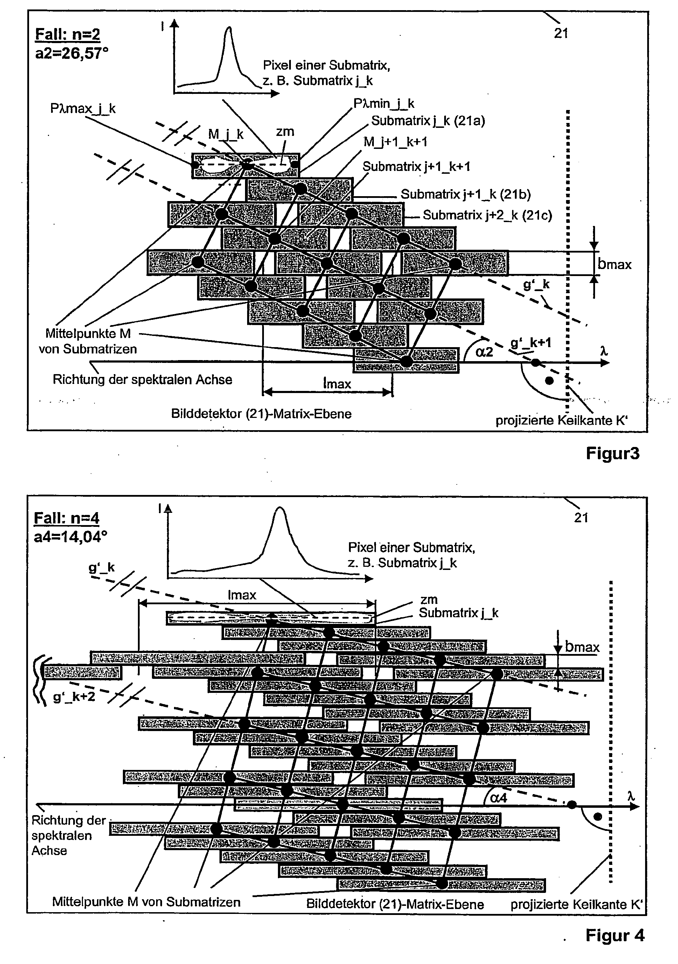

In der Schrift DE 103 21 885 A1 wird eine chromatisch-konfokale Anordnung mit einer brechkraftvariablen Komponente, beispielsweise eine diffraktive Komponente, beschrieben. Der in Figur 2 dieser Schrift dargestellten Anordnung ist zur Gewinnung der konfokalen Signale über der Wellenlänge zur Beleuchtung eine Linie von Mikrolinsen angeordnet und zur Analyse ein Spektrometer mit einer Flächenkamera nachgeordnet, so dass Linienprofile mittels eines einzigen flächigen Kamerabildes mittels eines Linien-Spektrometers aufgenommen werden können. In der Veröffentlichung "Chromatic confocal detection for high speed micro-topography measurements" von A. K. Ruprecht, K. Körner, T.F. Wiesendanger, H.J. Tiziani, W. Osten in Proceedings of SPIE, Vol. 5302-6, S. 53-60, 2004 wird in der Abbildung 4 ein chromatisch-konfokaler Liniensensor zur linienhaften Topografiemessung dargestellt. Dort ist zur Gewinnung der konfokalen Signale über der Wellenlänge der chromatisch-konfokalen Anordnung ein Linien-Spektrometer nachgeordnet, so dass Linienprofile von einer Objektoberfläche mittels eines einzigen Kamerabildes unter Einsatz einer einzigen Flächenkamera und eines Linien-Spektrometers aufgenommen werden können. Der Einsatz eines Spektrometers gestattet grundsätzlich eine höhere spektrale Auflösung im Vergleich zu einer Anordnung mit drei Farbfiltern oder einer RGB-Farbkamera oder auch einer Vierkanal-Farbkamera und ist damit im Vorteil.

In diesen genannten Schriften sind jedoch keine Merkmale zur dreidimensionalen Messung der Objektform oder der Mikroobjektform, also der vollflächigen Erfassung der Objektform mittels chromatisch-konfokaler Technik und spektraler Analyse mittels einer Kamera innerhalb eines Zeitintervalls zur Aufnahme eines einzigen Kamerabildes, also der Integrationszeit eines Kamera-Frames, angegeben, womit eine höhere spektrale Auflösung als mit drei oder vier Farbkanälen erreichbar wäre.

In der Dissertation von J. Schmoll mit dem "Titel 3D-Spektrofotometrie extragalaktischer Emissionslinien", eingereicht bei der der Universität Potsdam im Juni 2001, wird auf den Seiten 12 bis 13 die Linsenraster-Direktankopplung beschrieben, die von Courtes et al. Erstmals 1988 beim TIGER-Spektrografen eingesetzt wurde. Hierbei wird das Linsenraster um einen Winkel φ gegen die Dispersionsrichtung verdreht. Diese Technik gilt in der Auswertung durch die Verschiebung benachbarter Spektren als kompliziert und der Flächensensor wird in seiner Fläche nicht ökonomisch ausgenutzt, da kein hoher Flächenfüllfaktor besteht. In wissenschaftlichen Arbeiten werden hier auch die Begriffe 3D-Spektrofotometrie und abbildende Spektroskopie sowie auch Integral-Field-Spektrofotometrie verwendet.

Anwendungsgebiet der Erfindung

Die hier dargestellte Erfindung zur dreidimensionalen Messung der Objektform oder der Form und Lage eines oder mehrerer Objekte mittels chromatisch-konfokaler Technik kann für vielfältige Aufgaben in der Technik, beispielsweise auch für die schnelle Bestimmung der 3D-Form von kleineren, insbesondere tief- oder hochgeformten Objekten im Maschinenbau, in der Feinwerktechnik und in der Mikrosystemtechnik in einem weiten Skalenbereich, eingesetzt, werden. Darüber hinaus können auch biologische Objekte, einschließlich einer Vielzahl von Mikroobjekten, sowie auch geformte Kunstobjekte sowie prähistorische Objekte aller Art dreidimensional vermessen werden. Es kann aber auch die Vermessung der Form der Hornhaut eines Auges eines Lebewesens mit der erfinderischen Lösung sehr schnell durchgeführt werden.

Der Skalenbereich der lateralen und der Tiefenauflösung des Verfahrens kann mehrere Größenordnungen umfassen.

Weiterhin kann die Erfindung zur dreidimensionalen Messung der Objektform insbesondere auch an einem Zahn oder an mehreren Zähnen im Kiefer eines Menschen angewendet werden. Insbesondere wird für die Erfindung als Applikation also auch die schnelle, dreidimensionale Messung der Form für Anwendungen aller Art im Dentalbereich gesehen.

Ziele der Erfindung

Das Ziel der vorliegenden Erfindung besteht darin, ein universell anwendbares, optisches Messverfahren und Messsystem mit Kalibrierung zur schnellen, dreidimensionalen Messung für die gewerbliche Anwendung bereitzustellen.

Das technische Ziel der Erfindung besteht in der Erhöhung der Robustheit bei der schnellen, dreidimensionalen, optischen Messung der Form von Objekten oder der Form und Lage eines oder mehrerer Objekte aller Art, einschließlich der Messung in der mikroskopischen Skala. Das Ziel ist also die Gewinnung geometrischer Informationen und nicht die Gewinnung spektroskopischer Informationen.

Aufgabe der Erfindung

Es besteht die Aufgabe für die Erfindung, beim flächigen optischen Antasten eines Objekts oder mehrerer Objekts zur schnellen dreidimensionalen Messung der Objektform oder der Form und Lage eines oder mehrerer Objekte mittels chromatisch-konfokaler Technik gleichzeitig in verschiedenen Tiefen des Objektraumes mit spektraler Referenz zur Genauigkeitsverbesserung durch Kalibrierung zu messen, insbesondere im Zeitintervall der Aufnahme eines einzigen Kamerabildes, also der Integrationszeit für einen Kamera-Frame, zu gewinnen. Dabei kann es sich um Objekte aller Art im technischen und nichttechnischen Bereich handeln. Dabei soll eine wesentlich höhere spektrale Auflösung als eine mit drei oder vier Farbkanälen mittels mehrerer Farbfilter oder einer RGB-Farbkamera oder auch einer Vierkanal-Farbkamera erreichbar sein.

Insbesondere besteht hier die Aufgabe zur vergleichsweise schnellen und robusten dreidimensionalen Messung der Form eines Zahnes im Kiefer eines Menschen mit der chromatisch-konfokalen Technik mit spektraler Referenz zur Genauigkeitsverbesserung durch Kalibrierung.

Beschreibung der Erfindung anhand der Merkmale

Verfahren und Anordnung zur chromatisch-konfokalen Technik zur dreidimensionalen Messung der Objektform oder von Form und Lage eines oder mehrerer Objekte, einschließlich in der mikroskopischen Skale, insbesondere auch für einen Zahn oder Zähne im Kiefer eines Menschen, wobei die folgenden Komponenten eingesetzt werden: Ein flächiges Array von polychromatischen Punktlichtquellen, welches mindestens eine vorgeordnete polychromatische Lichtquelle sowie auch mindestens eine passive, gerasterte Komponente aufweist, wobei die polychromatischen Punktlichtquellen eine Vielzahl von Lichtbündel erzeugen, ein Strahlteiler, mindestens ein Element, dessen Brechkraft von der Wellenlänge abhängt zur chromatischen Tiefenaufspaltung, mindestens eine flächige, vorzugsweise pixelierte Detektor-Matrix im Detektionsstrahlengang, der Mittel zur lateralen spektralen Aufspaltung und Mittel zur Fokussierung auf die Detektor-Matrix vorgeordnet sind, und ein Messobjektiv zur Objektbeleuchtung und -aufnahme. Dabei wird hier Licht als Synonym für elektromagnetische Strahlung vom UV- bis zum IR-Bereich verwendet. Dabei sind die polychromatischen Punktlichtquellen entweder selbstleuchtend oder das flächige Array von polychromatischen Punktlichtquellen ist als ein Mikroblenden-Array oder als ein Mikrolinsen-Array oder als Mikrolinsen-Array mit nachgeordnetem Mikroblenden-Array ausgebildet, wobei dem flächigen Array mindestens eine polychromatische Messlichtquelle vorgeordnet ist.

Erfindungsgemäß werden im Verfahren und in der Anordnung zumindest zeitweise, zumindest teilweise spektral definierte, also spektral vorbestimmte Referenzlichtbündel zur chromatischen, also im Sinne einer spektralen Kalibrierung der Anordnung erzeugt, welche sich sowohl über mindestens eine passive, gerasterte Komponente des Arrays als auch über einen vorzugsweise achromatischen Referenzstrahlengang ausbreiten, der in der Anordnung mittels Strahlteiler ausgebildet ist. Die Referenzlichtbündel werden im Referenzstrahlengang reflektiert, wobei für die Referenzlichtbündel auch eine Inversion der Wellenfront erzeugt wird.

Für die Erzeugung der Referenzlichtbündel ist der Messlichtquelle vorzugsweise mindestens eine zusätzliche, zumindest teilweise spektral definierte, also spektral vorbestimmte Referenzlichtquelle beigeordnet oder das zumindest teilweise spektral definierte Referenzlicht wird vorzugsweise auch von der Messlichtquelle oder den polychromatischen Punktlichtquellen vorzugsweise durch optische Filterung erzeugt.

Vorzugsweise kann eine, vorzugsweise zumindest näherungsweise monochromatische, vorzugsweise elektrisch schaltbare, separate Referenzlichtquelle dem Mikroblenden-Array oder dem Mikrolinsen-Array oder den Mikrolinsen-Array mit nachgeordnetem Mikroblenden-Array vorgeordnet sein. Diese Referenzlichtquelle kann durch eine einzige Laserdiode dargestellt sein.

Vorzugsweise sind jedoch vorteilsweise zwei, vorzugsweise zumindest näherungsweise monochromatische, vorzugsweise elektrisch schaltbare, separate Referenzlichtquellen dem Mikroblenden-Array oder dem Mikrolinsen-Array oder den Mikrolinsen-Array mit nachgeordnetem Mikroblenden-Array vorgeordnet, welche das Array vorzugsweise vollflächig beleuchten. Die Referenzlichtquellen zur chromatischen Kalibrierung der Anordnung sind dagegen im Messvorgang jedoch vorzugsweise ausgeschaltet. So sendet vorzugsweise nur bei der chromatischen Kalibrierung das mit Referenzlichtquellen beleuchtete Array - oder eine mit Referenzlichtquellen beleuchtete gerasterte Komponente des Arrays - Licht aus, welches über den Referenzstrahlengang mittels Referenzlichtbündel abgebildet wird, wobei im Referenzstrahlengang vorzugsweise auch eine Zwischenabbildung von mindestens einer gerasterten Komponente des Arrays erfolgen kann. Diese Referenzlichtquellen können durch Laserdioden dargestellt sein.

Erfindungsgemäß sind also die Positionen der Mess-Punktlichtquellen stets mit denen der Referenz-Punktlichtquellen zumindest näherungsweise lateral identisch, da hierbei erfindungsgemäß dieselben Komponenten des Arrays benutzt werden, beispielsweise dieselben Mikrolinsen oder dieselben Pinholes. Es wird also nur die Lichtquelle gewechselt oder ein optischer Filter eingewechselt oder die Spektral-Charakteristik der Lichtquelle verändert. Erfindungsgemäß ist es also möglich, dass das flächige Array von Punktlichtquellen, das Spektrum vorbestimmt ändern kann, so dass zum einen polychromatisches Licht für die Messung und spektral eingegrenztes Licht, vorzugsweise zumindest näherungsweise monochromatisches Licht, für die chromatische Kalibrierung erzeugt wird, wobei dies vorzugsweise zu unterschiedlichen Zeitintervallen erfolgt.

Es ist aber auch möglich, dass die polychromatische Messlichtquelle vorzugsweise eine oder mehrere charakteristische, vorbestimmte Merkmale im Spektrum aufweist, beispielsweise lokale Minima oder Maxima sowie steile Kanten, die anstelle von einer oder mehreren separaten Referenzlichtquellen zur Kalibrierung der Anordnung verwendet werden. Vorteilhaft für die Auswertung ist jedoch ein eher glattes Messlichtspektrum, da so die Auswertung in der Regel eine höhere Genauigkeit ermöglicht, wenn man von numerisch aufwendigen Prozeduren Abstand nimmt.

Nach dem Passieren des Referenzstrahlenganges werden die Referenzlichtbündel wieder in den Strahlengang, der zur Detektion führt, eingekoppelt und gelangen nach spektraler Aufspaltung mittels Diffraktions- oder Dispersionselement, also Beugungsgitter oder Dispersionsprismenkeil, vorzugsweise fokussiert auf die vorzugsweise pixelierte Detektor-Matrix, wobei vorzugsweise die Pupille des Detektorobjektivs sowohl vom Referenzlichtbündel als auch vom Objektlichtbündel zumindest näherungsweise gleichflächig durchstrahlt wird. Mittels der Detektor-Matrix werden die mittels Referenzlichtbündel vorzugsweise scharf abgebildeten Bilder der Punktlichtquellen, also die Referenzpunktbilder, ebenfalls detektiert. Erfindungsgemäß werden dabei mittels dieser Referenzpunktbilder-Daten viele lateral versetzte Submatrizen zur spektralen Analyse von Objektlicht auf der Detektor-Matrix numerisch abgesteckt, die dann gemeinsam ein Submatrizen-Array bilden und zur dreidimensionalen Messung genutzt werden. Dabei dient jede Submatrix zur Gewinnung der Tiefeninformation für genau einen Objektpunkt. In jeder Submatrix erfolgt beim Messen durch chromatische Lateralaufspaltung die Spektralanalyse des Objektlichts.

Dabei werden mittels der Referenzpunktbilder vorzugsweise der Anfang und das Ende einer Submatrix zur spektralen Analyse auf der Detektor-Matrix durch die mittels Detektor-Matrix gewonnenen Messdaten bestimmt. Dies ist möglich, indem beispielsweise die Schwerpunkt-Positionen oder die Maximums-Positionen der Intensität der Referenzpunktbilder als Referenz-Positionen, d. h. als spektrale Referenzpunkte, auf der Detektor-Matrix numerisch ermittelt werden. Diese spektralen Referenzpunkte dienen zur chromatischen Kalibrierung der Anordnung. Die Verbindungslinie von mindestens zwei spektralen Referenzpunkten bildet dann also die spektrale Achse einer jeden Submatrix zur spektralen Analyse auf numerischer Basis. Durch diese mittels Referenzdaten gestützte Bestimmung mittels spektraler Referenzpunkte ist die Kenntnis der winkelmäßigen Orientierung der spektralen Achse auf der Detektor-Matrix mit einer hohen Genauigkeit gegeben. Es ist damit auch möglich, eine Mittelung der in jeder Submatrix bestimmten winkelmäßigen Orientierungen der spektralen Achse - auf der Basis der ermittelten Referenzpunkte - in jeweils einem größeren Bereich auf der Detektor-Matrix durchzuführen, um die Lage der spektralen Achse zumindest in einem Bereich der Detektormatrix noch genauer - als bei einer Bestimmung mittels einer einzigen Submatrix - ermitteln zu können. Durch eine mittels Referenzdaten gestützte Nachjustierung der Anordnung - beispielsweise, indem die Mittel zur spektralen Aufspaltung, beispielsweise ein Dispersionsprismenkeil oder ein Beugungsgitter oder auch die Detektor-Matrix, durch eine Rotation um die optische Achse nachjustiert werden - kann so die spektrale Achse auf der Detektor-Matrix genau parallel zu den Zeilen oder gegebenenfalls auch zu den Spalten der Detektor-Matrix zumindest in der Mitte der Detektor-Matrix ausgerichtet werden. Dies verbessert in hohem Maße die Tiefenmessgenauigkeit, insbesondere bei einer nicht sehr hochpixligen Detektor-Matrix, da die äußeren Begrenzungsstrecken der vorzugsweise rechteckigen Submatrizen dann stets mit den Zeilen und Spalten der Detektor-Matrix zumindest im inneren Bereich des Feldes identisch sind, also die Begrenzungsstrecken der Submatrizen keine Zeilen oder Spalten wechseln, bzw. schneiden, wodurch sich der numerische Aufwand der Datenauswertung erheblich verringern kann. Dabei ist es möglich, dass beispielsweise aufgrund von Verzeichnungen des Fokussierobjektivs die winkelmäßige Orientierung der spektralen Achse auf der Detektor-Matrix etwas variiert. Im äußeren Bereich des Feldes kann sich bei stärkeren Verzeichnungen durchaus die winkelmäßige Orientierung der spektralen Achse auf der Detektor-Matrix so ändern, dass die Begrenzungsstrecken der Submatrizen unerwünschterweise Zeilen oder Spalten der Detektor-Matrix schneiden. Die Kenntnis der winkelmäßigen Orientierung der spektralen Achse, beispielsweise im äußeren Bereich des Messfeldes, kann somit gezielt zur numerischen Korrektur der Messergebnisse und damit zur Verbesserung der Genauigkeit genutzt werden.

Außerdem wird vorzugsweise der gegebenenfalls etwas ortsabhängige Grad der spektralen Aufspaltung - also entlang der spektralen Achse - auf der Detektor-Matrix beilspielsweise aufgrund von Verzeichnungen des Fokussierobjektivs für jede Submatrix mittels der Position von mindestens zwei Referenzpunktbildern, aus denen spektrale Referenzpunkte errechnet werden, numerisch bestimmt. Dadurch wird eine Subpixel-Interpolation entlang der spektralen Achse bei der Spektralanalyse durchführbar und messtechnisch auch sinnvoll. So kann bei der Messung die sich ergebende Messwellenlänge am Maximum oder am Schwerpunkt des konfokalen Signals sehr genau bestimmt werden, auch wenn im Strahlengang Verzeichnungen bestehen und/oder die Detektor-Matrix lateral dejustiert ist oder sich beispielsweise durch Temperaturänderungen in der Anordnung oder die Alterung von Komponenten kleinere Lichtbündelverschiebungen auf der Detektor-Matrix ergeben.

Durch geformte Referenzobjekte oder auch plane Referenzobjekte in verschiedenen Tiefen des messbaren Objektraums kann innerhalb einer Tiefenkalibrierungs-Prozedur - also nach Fertigstellung eines Messgerätes auf Basis dieser Erfindung - die Zuordnung der Tiefenposition von Objektpunkten zu bestimmten Messwellenlängen hochgenau erfolgen und langfristig in einem Kalibrier-File gespeichert werden. Dabei werden auch die Positionen der spektralen Referenzpunkte auf der Detektor-Matrix langfristig für jede einzelne Submatrix gespeichert, welche dann die Sollpositionen der spektralen Referenzpunkte darstellen. Die chromatische Kalibrierung mittels spektraler Merkmale der Messlichtquelle oder mittels einer oder mehrerer Referenzlichtquellen - also eine interne Kalibrierung - erfolgt zu dem Zweck, beim Einsatz eines Messgerätes auf Basis dieser Erfindung Veränderungen der Positionen der spektralen Referenzpunkte im Vergleich zu den Sollpositionen zu erkennen, indem die Positionen der spektralen Referenzpunkte immer wieder in vom Anwender der Anordnung wählbaren Zeitabständen ermittelt und mit den abgespeicherten Sollpositionen der spektralen Referenzpunkte im Kalibrier-File verglichen werden. Dabei wird hier stets von einer sehr genauen spektralen Referenz ausgegangen, beispielsweise auf der Basis von stabilisierten Laserdioden, deren Genauigkeit weit oberhalb der hier betrachteten Ungenauigkeiten durch nicht perfekte Gerätekomponenten, Komponentenalterungen oder Dejustierungen liegt.

Auf die explizite Darstellung der spektralen Informationen kann bei der dreidimensionalen Messung auch durchaus verzichtet werden, da die Detektor-Matrix ohnehin nur Intensitäten erfassen kann, denn die chromatischen Eigenschaften von Komponenten dienen nur intern zur Informationsgewinnung, da bei dieser Erfindung nicht die Gewinnung spektraler Informationen das Ziel darstellt, sondern die Gewinnung geometrischer Informationen.

So ist es auch vorzugsweise möglich, die sich mittels chromatischer Tiefenaufspaltung und chromatischer Lateralaufspaltung in der Anordnung in jeder Submatrix innerhalb einer Tiefenkalibrierungs-Prozedur in jeder Tiefe ergebende laterale Position eines Schwer- oder Maximumspunktes für jeden messbaren Objektpunkt eines Referenzobjekts als Kalibrierkurven "Lateralposition über Objekttiefe" Submatrixweise langfristig zu speichern. Zusätzlich werden auch hierbei vorzugsweise die lateralen Positionen der spektralen Referenzpunkte auf der Detektor-Matrix in einem Langzeitspeicher abgelegt, also die Sollpositionen langfristig für jede einzelne Submatrix gespeichert. Beim Messen eines unbekannten Objektes werden diese Kalibrierkurven "Lateralposition über Objekttiefe" für jede einzelne Submatrix verwendet, auch, wenn sich die aktuelle Position einer Submatrix als Ergebnis der chromatischen Kalibrierung etwas geändert hat. Die chromatische Kalibrierung mittels spektraler Merkmale der Messlichtquelle oder von einer oder mehrerer Referenzlichtquellen - also die interne Kalibrierung - erfolgt dann zu dem Zweck, interne Veränderungen beim Einsatz eines Messgerätes auf Basis dieser Erfindung im Trend zu erkennen, indem die aktuellen Lateralpositionen der spektralen Referenzpunkte kontrolliert werden, und ermittelte Abweichungen gegebenenfalls zur Korrektur genutzt werden. Dies kann jeweils vor dem Beginn einer Messung oder einer Messserie erfolgen. Bei extremen Abweichungen der aktuellen Lateralpositionen der spektralen Referenzpunkte von den gespeicherten Soll-Lateralpositionen erfolgt eine Fehlermeldung. In diesem Fall kann eine externe Tiefenkalibrierung erfolgen oder das Gerät neu justiert oder repariert werden.

Die Quelle elektromagnetischer Strahlung der Anordnung kann breitbandig, beispielsweise im UV-, im VIS- oder auch im IR-Bereich, ausgebildet sein und auch kurzgepulst werden. Beispielsweise kann ein Kurzpulslaser mit einer Pulsfrequenz beispielsweise im 100 Hz-Bereich eingesetzt werden und dessen Pulse mit einer Detektor-Matrix synchronisiert werden. Dies stellt für schnell bewegte Szenen eine Möglichkeit für deren dreidimensionale Vermessung dar.

Weiterhin werden die Referenzlichtbündel vorzugsweise durch Teilung der Amplitude erzeugt, vorzugsweise durch einen Strahlteiler. Weiterhin können die Referenzlichtbündel aber auch vorzugsweise durch Beugung in der nullten Ordnung erzeugt werden. Dazu ist in der Pupille des Messobjektivs vorzugsweise ein diffraktiv-optisches Element, beispielsweise eine Zonenlinse angeordnet.

Die Objektlichtbündel werden vorzugsweise in der ersten Beugungsordnung erzeugt, wodurch sich im Objektraum die erforderliche chromatische Tiefenaufspaltung ergibt.

Die Referenzlichtbündel werden also vorzugsweise achromatisch abgebildet. Dabei werden diese also vorzugsweise in der nullten Beugungsordnung gebeugt, fokussiert und an einer Referenzfläche mit Teilreflexion reflektiert, welche dem Messobjektiv nachgeordnet ist. Damit ist die erforderliche Inversion der Wellenfronten gegeben, damit das Referenz-Punktlichtquellen-Array richtig orientiert auf der Detektor-Matrix abgebildet werden kann.

Andererseits können die Referenzlichtbündel auch nach der Strahlteilung am Strahlteiler durch einen Tripelreflektor rückreflektiert werden. Der Tripelreflektor dient zur zumindest näherungsweise achromatischen Reflexion des Referenzlichts. Auch in diesem Fall ist die erforderliche laterale Inversion der Wellenfronten gegeben. Dabei ist dem Tripelreflektor vorzugsweise ein Bandsperrfilter zur weitgehenden Unterdrückung des Messlichts vorgeordnet. Andererseits kann der Tripelreflektor im Messvorgang vorzugsweise auch seitlich verschoben oder verkippt sein, damit von diesem kein Messlicht reflektiert und somit unerwünschterweise auf den Detektor gelangen kann.

Andererseits kann vorzugsweise auch mittels steuerbarer, elektrooptischer oder elektromechanischer Mittel das Restmesslicht, welches sich unerwünschterweise bei der Objektvermessung gegebenenfalls über den Referenzstrahlengang ausbreiten kann, von der Detektor-Matrix durch vorbestimmtes Abblenden oder Ablenken ferngehalten werden. Es ist aber auch eine numerische Kompensation des Referenzlichts im Messsignal möglich.

Weiterhin kann vorzugsweise ein Anteil des polychromatischen Messlicht zur fotometrischen, pixelweisen Kalibrierung der Submatrizen in bekannter Art und Weise genutzt werden, indem über den Referenzstrahlengang - vorzugsweise nicht im Mess- sondern nur im Kalibriervorgang - ein Anteil des Messlichts auf die Detektor-Matrix gelangt. Wenn dieser Anteil des Messlichts weit unterhalb der Vollaussteuerung der Pixel der Detektor-Matrix liegt, kann eine Akkumulation von vielen Einzelmessungen mittels Aufnahme einer Vielzahl von Bildern der Detektor-Matrix erfolgen. Dies wird in der Regel vor dem Beginn einer Messung und zwischen zwei Messungen im Sinne einer Hintergrundroutine ausgeführt, jedoch ist auch eine nachträgliche fotometrische, pixelweise Kalibrierung der Submatrizen möglich. Im Fall, dass der Anteil des Messlichts nicht durch steuerbare optische Mittel ausschaltbar ist, sondern permanent, d. h. also auch bei der optischen Objektantastung, stets auf die Detektor-Matrix gelangt, sollte dieser Anteil vom mittels Submatrix gewonnenen Messsignal stets subtrahiert werden.

Die Anordnung zur robusten chromatisch-konfokalen Technik zur dreidimensionalen Messung der Objektform oder von Form und Lage eines oder mehrerer Objekte ist mit folgenden Komponenten in der Anordnung ausgebildet:

Ein zumindest näherungsweise gerastertes, vorzugsweise quadratisch gerastertes, flächiges Array von polychromatischen Punktlichtquellen, welches mindestens eine vorgeordnete polychromatische Lichtquelle sowie auch mindestens eine passive, gerasterte Komponente aufweist, wobei die polychromatischen-Punktlichtquellen eine Vielzahl von Lichtbündeln erzeugen, ein Strahlteiler, mindestens ein Element, dessen Brechkraft von der Wellenlänge abhängt, mindestens eine flächige Detektor-Matrix im Detektionsstrahlengang, der Mittel zur lateralen spektralen Aufspaltung und Mittel zur Fokussierung auf die Detektor-Matrix vorgeordnet sind, so dass auf der Detektor-Matrix eine spektrale Achse besteht, auch als $\lambda$-Achse bezeichnet, und ein Messobjektiv zur Objektbeleuchtung und -aufnahme.

Erfindungsgemäß ist in der Anordnung ein Referenzstrahlengang mit mindestens einem, zumindest zeitweise, zumindest teilweise spektral definierten, vorbestimmten Referenzlichtbündel, vorzugsweise jedoch mit zwei oder mehreren Referenzlichtbündel, zur Kalibrierung der Anordnung angeordnet und das flächige Array von polychromatischen Punktlichtquellen ist dabei erfindungsgemäß relativ verdreht um einen spitzen Winkel zur spektralen Achse auf der flächigen Detektor-Matrix (21) angeordnet, wobei die Drehung um die optische Achse (OA) der Anordnung ausgeführt ist, so dass eine Verbindungslinie von Punktlichtquellen bei deren Projektion in die Ebene der Detektor-Matrix dort mit der spektralen Achse, der $\lambda$-Achse, einen spitzen Winkel einschließt.

Die erfindungsgemäße Anordnung von Submatrizen zur spektralen Aufspaltung von Objektlicht auf der Detektor-Matrix zwecks spektraler Analyse erfolgt so, dass die Detektor-Matrix zumindest näherungsweise vollflächig mit lateral versetzten, länglichen Submatrizen ausgefüllt ist, die aneinander grenzen und somit sich nicht überdecken und vorzugsweise parallel zu Zeilen der Detektor-Matrix angeordnet sind. Um dies zu erreichen, ist also erfindungsgemäß das, vorzugsweise zumindest näherungsweise quadratisch gerasterte, flächige Array von polychromatischen Punktlichtquellen relativ verdreht um einen spitzen Winkel zur spektralen Achse auf der flächigen Detektor-Matrix angeordnet, wobei diese Drehung um die optische Achse der Anordnung ausgeführt ist, so dass eine Verbindungslinie von Punktlichtquellen bei deren Projektion in die Ebene der Detektor-Matrix dort mit der spektralen Achse, der $\lambda$-Achse, einen spitzen Winkel einschließt.

Dabei ist vorzugsweise die spektrale Achse der vorgeordneten Mittel zur spektralen Aufspaltung parallel zu den Zeilen der Detektor-Matrix orientiert. So können auch bei vollständiger Ausnutzung der Fläche der Detektor-Matrix rechteckige, längliche Submatrizen gebildet werden. Der Verdrehwinkel $\alpha$ weist dabei vorzugsweise einen Betrag im Bereich von 2,8 Altgrad bis 26, 6 Altgrad auf, wobei der letztgenannte Winkelwert zu einer sehr geringen spektralen Auflösung und damit auch geringer Tiefen-Auflösung führen würde.

Die auf der Detektor-Matrix bestehende spektrale Achse, die $\lambda$-Achse, der vorgeordneten Mittel zur lateralen spektralen Aufspaltung schließt dabei dann also erfindungsgemäß auch den spitzen Winkel $\alpha$ mit zumindest näherungsweise und zumindest stückweise parallelen Referenzgeraden $g'\_k$ ein. Dabei werden die Referenzgeraden $g'\_k$ durch spektrale Referenzpunkte $R\lambda\_jk$, die von vorzugsweise zwei direkt benachbarten Punktlichtquellen des Arrays, beispielsweise $j\_k$ und $j+1\_k+1$, durch optische Abbildung erzeugt sind, bestimmt. Mittels dieser Referenzpunkte $R\lambda\_jk$ werden vorzugsweise rechteckige Submatrizen auf der Detektor-Matrix numerisch abgesteckt, indem um den Referenzpunkt oder die Referenzpunkte herum eine bestimmte Anzahl von Pixeln einer Submatrix numerisch zugeordnet wird. Dabei kann mittels zweier spektraler Referenzpunkte auch der geometrische Mittelpunkt M einer Submatrix besonders genau bestimmt werden.

Wird ein Verhältnis $V$ von maximaler Länge $l$max zu maximaler Breite $b$max der Submatrizen beim Design der erfinderischen Anordnung vorgegeben, wobei die Länge $l$max zum Erreichen einer gewünschten. Tiefen-Auflösung und die Nutzung der maximalen Breite $b$max zum Verringern, bzw. Vermeidens des Übersprechens zwischen den Intensitätsverteilungen der Submatrizen dient, kann bei einem quadratischen Raster des Arrays von Punktlichtquellen mittels nachstehender Gleichung (1)

$$V_n = \frac{l\,\mathrm{max}}{b\,\mathrm{max}} = \frac{n^2}{\cos^2\left[\arctan\left(\frac{1}{n}\right)\right]} = n^2 + 1 \qquad (1)$$

durch Iteration ein ganzzahliger Wert n bestimmt werden, der dem gewünschten Verhältnis V möglichst nahe kommt, wobei n stets ganzzahlig und stets größer oder gleich 1 ist. Mittels des so ermittelten ganzzahligen Werts n kann mittels nachstehender Gleichung (2)

$$\alpha_n = \arctan\left(\frac{1}{n}\right) \qquad (2)$$

der spitze, zu n zugehörige Winkel $\alpha_n$ bestimmt werden, wobei n stets ganzzahlig und stets größer oder gleich 1 ist.

Technisch sehr interessante Werte für n im Sinne dieser Erfindung liegen im Bereich von 2 bis 8, wobei der Wert n=4 besonders interessant für die technische Anwendung ist, für den sich ein Winkel $\alpha_4$ =14,04 Altgrad und ein Verhältnis $V_4$=17 ergibt. So können für den Wert n=4 beispielsweise Submatrizen mit 68x4 Pixeln auf der Detektor-Matrix gebildet und überdeckungsfrei angeordnet werden, wobei sich hierbei ein Füllgrad der Detektor-Matrix mit Submatrizen zumindest im mittleren Bereich einer zentrierten Detektor-Matrix von 100% ergibt. Für eine Detektormatrix auf der Basis eines Chips mit etwa 30 Mega-Pixel können'für den Fall n=4 etwa 100.000 Objektpunkte mittels eines einzigen Kamera-Frames bei Anwendung der Erfindung detektiert werden. Dies setzt eine vergleichsweise hohe numerische Apertur und einen guten Korrektionszustand des Fokussierobjektivs voraus, welches der Detektor-Matrix direkt vorgeordnet ist.

Um vorzugsweise einen dieser Winkel $\alpha_n$ muss also erfindungsgemäß das vorzugsweise quadratisch gerasterte, flächige Array von Punktlichtquellen um die optische Achse in Bezug auf die spektrale Achse verdreht und das zugehörige Längen-Breiten-Verhältnis der Submatrizen $V_n$ realisiert sein, damit sich eine vollständige Abdeckung der Detektor-Matrix mit Submatrizen ohne Überschneidung derselben ergeben kann.

Weiterhin sollte - um insbesondere ein Übersprechen zwischen benachbarten Submatrizen in Querrichtung zu minimieren -das Verhältnis VT zwischen dem effektiven Durchmesser der Punktlichtquellen DP und dem Abstand d der Punktlichtquellen im Array folgende Beziehung eingehalten werden:

$$VT_n = \frac{DP}{d} \le \frac{1}{2n} \,. \qquad (3)$$

Für ein rechteckiges Raster des Arrays von Punktlichtquellen folgt der spitze Winkel in Abhängigkeit von n für den zugehörigen Winkel $\alpha_{n\_R}$ mittels nachstehender Gleichung

$$\alpha_{n\_R} = \arctan\left(\frac{h}{n \cdot b}\right) \qquad (4)$$

mit der Rasterkonstanten h in der Höhe und der Rasterkonstanten b in der Breite, wobei n stets ganzzahlig und stets größer oder gleich 1 ist. Bei Einhaltung des Winkels $\alpha_n$ Oder des Winkels $\alpha_{n\_R}$ ist die Detektor-Matrix zumindest näherungsweise vollflächig mit länglichen Submatrizen ausfüllbar.

Eine vorzugsweise nichtquadratische Rasterung des Arrays von Punktlichtquellen ist also erfindungsgemäß auch einsetzbar, jedoch für die messtechnische Applikation meist von etwas geringerem Interesse.

Die Mittel zur lateralen spektralen Aufspaltung können dabei als Beugungsgitter oder als Dispersionsprismenkeil mit realer oder gedachter Keilkante ausgebildet sein. Dabei ist die spektrale Achse, die λ-Achse, stets senkrecht zu den Linien oder linienhaften Strukturen des Beugungsgitters, beziehungsweise senkrecht zur realen oder gedachten Kante des Dispersionsprismenkeils orientiert.

Weiterhin kann in der Anordnung ein optischer Bandpassfilter angeordnet sein, damit die polychromatische Lichtquelle in ihrem Spektrum so beschnitten wird, dass es zwischen den Submatrizen kein laterales Übersprechen insbesondere in Längsrichtung gibt.

Weiterhin kann vorzugsweise bei der Anordnung zur robusten chromatisch-konfokalen Technik zur dreidimensionalen Messung der Objektform oder von Form und Lage eines oder mehrerer Objekte der Detektor-Matrix in einer zu dieser zumindest näherungsweise optisch konjugierten Ebene ein Lochblenden-Array vorgeordnet sein, welches Licht von scharf abgebildeten Bildern der Punktlichtquellen passieren lässt. Vorzugsweise kann dazu eine weitere Abbildungsstufe der Detektor-Matrix vorgeordnet sein, in welcher ein Zwischenbild aus dem Objektraum mit scharf abgebildeten Bildern von Punktlichtquellen entsteht. Bei dem Lochblenden-Array ist vorzugsweise die Anzahl der Lochblenden gleich der Anzahl der Punktlichtquellen. Dabei können die Durchmesser der Lochblenden auch etwas größer als die scharf abgebildeten Bildern der Punktlichtquellen ausgebildet sein. Vorzugsweise ist dabei das Lochblenden-Array im Strahlengang nach der Strahlteilung zur Auskopplung in den Detektionsstrahlengang angeordnet, so dass keine Frontreflexe in den Detektionsstrahlengang gelangen können. Mit dem Lochblenden-Array wird nicht scharf fokussiertes Licht aus dem Objektraum zumindest teilweise ausgeblendet und somit die Signalauswertung gegebenenfalls verbessert. Dabei ist es auch möglich, anstelle des Lochblenden-Arrays ein Schlitzblenden-Array zu verwenden, deren Schlitze das Licht von scharf abgebildeten Bildern der Punktlichtquellen passieren kann. Das Schlitzblenden-Array ermöglicht im Vergleich zum Lochblenden-Array eine einfachere Justierung im Strahlengang.

Weiterhin ist vorzugsweise das quadratisch gerasterte, flächige Array in seiner Rasterkonstanten elektronisch steuerbar ausgebildet, beispielsweise als Pinhole-Array auf der Basis eines LC- Displays, eines LCOS-Displays oder eines digitalen Mikrospiegel-Arrays.

Zusammengefasst ergibt sich also folgender erfinderischer Ansatz: Verfahren und Anordnung zur chromatisch-konfokalen Technik zur schnellen, dreidimensionalen Messung, insbesondere der Objektform, insbesondere auch an einem Zahn im Kiefer eines Menschen, mit einem flächigem Array, welches mindestens auch eine passive; gerasterte Komponente aufweist, von polychromatischen Punktlichtquellen, einer flächigen Detektor-Matrix, der Mittel zur lateralen spektralen Aufspaltung vorgeordnet sind, und einem Objektiv zur Objektbeleuchtung und -aufnahme. Erfindungsgemäß wird zur chromatischen Kalibrierung zumindest zeitweise, ein zumindest teilweise spektral definiertes Referenzlichtbündel unter Nutzung auch von mindestens einer passiven gerasterten Komponente des Arrays von Punktlichtquellen erzeugt. Vorzugsweise werden jedoch mehrere Referenzlichtbündel erzeugt. Dabei wird dieses Referenzlichtbündel oder es werden mehrere Referenzlichtbündel über einen Referenzstrahlengang in den Detektionsstrahlengang zur spektralen lateralen Aufspaltung eingekoppelt und anschließend auf die Detektor-Matrix als Referenzpunktbilder fokussiert. So werden auf der Detektor-Matrix Positionen, bzw. Koordinaten von spektralen Referenzpunkten errechnet und mittels dieser Positionen werden vorzugsweise rechteckige Submatrizen zur spektralen Analyse von Objektlicht auf der Detektor-Matrix pixelgenau abgesteckt, welche dann zur Messpunktgewinnung dienen und dabei schließen erfindungsgemäß Referenzpunktgeraden, auf denen sich spektrale Referenzpunkte von direkt benachbarten Submatrizen oder errechnete Punkte, beispielsweise Mittelpunkte befinden, wobei hier stets nur an Längsseiten anliegende benachbarte Submatrizen betrachtet werden, einen spitzen Winkel mit der spektralen Achse der vorgeordneten Mittel zur spektralen Aufspaltung ein. Die örtliche winkelmäßige Orientierung der spektralen Achse auf der Detektor-Matrix wird vorzugsweise aus mindestens zwei spektralen Referenzpunkten pro Submatrix bestimmt, so dass die Detektor-Matrix zumindest näherungsweise vollständig mit länglichen, vorzugsweise rechteckigen Submatrizen ausfüllbar ist. Diese rechteckigen Submatrizen sind vorzugsweise parallel zu den Zeilen oder Spalten der Detektor-Matrix orientiert.

Beschreibung der Figuren

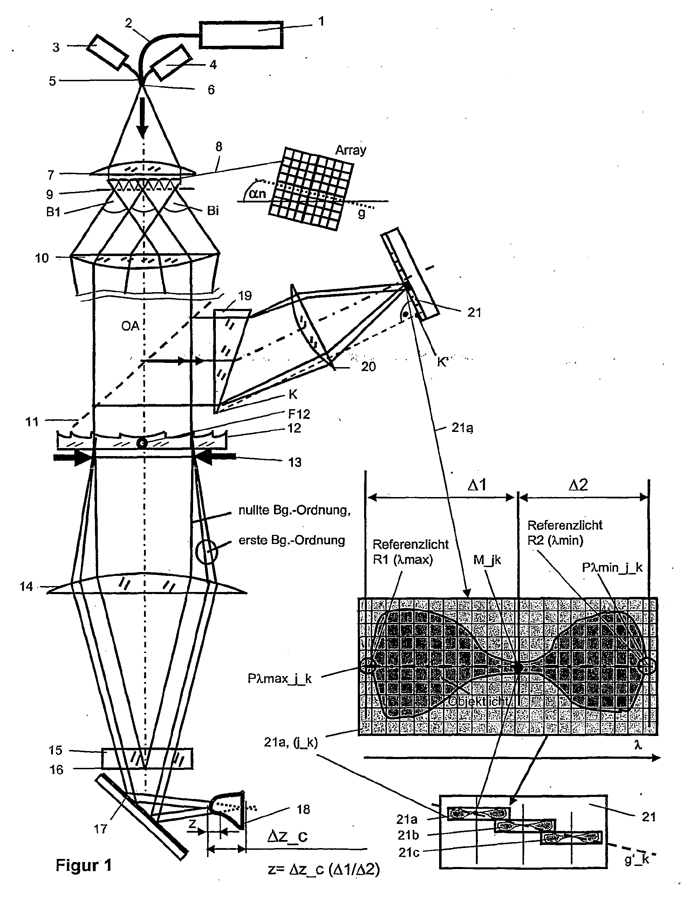

Die Erfindung wird anhand der Figuren 1 bis 4 beschrieben.

Die Figur 1 stellt eine Anwendung für eine intraorale Kamera zur optischen, dreidimensionalen Messung der Form eines Zahnes dar. Die polychromatische Lichtquelle für die Objektmessung ist als fasergekoppelte Superlumineszenz-Diode 1 ausgebildet, die eine Halbwertsbreite in der Größenordnung von etwa 100 nm aufweist. Das Licht derselben wird in eine Faser 2 eingekoppelt. Weiterhin sind eine erste schaltbare Laserdiode 3 und eine zweite schaltbare Laserdiode 4 angeordnet, deren Licht als Referenzlicht zur Kalibrierung der Anordnung verwendet wird, und über eine Y-Weiche 5, beziehungsweise über eine Y-Weiche 6 in die Faser 2 eingekoppelt wird. Das aus dem Ende der Faser 2 austretende Mess- und Referenzlicht gelangt auf ein Kollimatorobjektiv 7, das zur Bündel-Kollimierung dient. Es entsteht mittels diesem zumindest eine näherungsweise plane Welle, die auf das Mikrolinsen-Array 8 mit etwa 100 x 150 Mikrolinsen gelangt, welche Foki ausbilden, die auf ein angepasstes und ausgerichtetes Pinhole-Array 9 treffen. Das Mikrolinsen-Array 8 und das Pinhole-Array 9 bilden zusammen ein Punktlichtquellen-Array mit quadratischem Raster. Von den einzelnen Pinholes, welche die Punktlichtquellen darstellen, propagieren zumindest näherungsweise Kugelwellen, also divergierende Lichtbündel B1 bis Bi, aus denen mittels eines weiteren Kollimatorobjektivs 10 jeweils zumindest näherungsweise Planwellen, also-kollimierte Lichtbündel, gebildet werden und welche den Strahlteiler 11 passieren und auf eine Phasen-Zonenlinse 12 mit negativer Brechkraft treffen. Das Messlicht transmittiert an dieser vorwiegend in der ersten Beugungsordnung. Dagegen kann das Referenzlicht, dessen Wellenlänge bei der ersten Laserdiode 3 etwas oberhalb, beziehungsweise bei der zweiten Laserdiode 4 etwas unterhalb der Spektralverteilung des Messlichts liegt, die Phasen-Zonenlinse 12 auch in der nullten Beugungsordnung passieren. Diese Phasen-Zonenlinse 12 befindet sich in der Pupillenebene des Messobjektivs 14, das hier das Abbildungssystem für das Objekt 18 darstellt. Die Brennweite des Messobjektivs 14 liegt in der Größenordnung von 100 mm bis 200 mm. Die Pupille wird durch die Blende 13 bestimmt. Messlicht und Referenzlicht werden mittels des Messobjektivs 14 über den Spiegel 17 in den Objektraum fokussiert. Die numerische Apertur (NA) des Messobjektivs 14 beträgt hierbei NA=0,15. Somit können auch Details des Zahnes 18 vermessen werden, die einen großen Gradienten aufweisen. Durch die wellenlängenabhängige Brechkraft der Zonenlinse 12 kommt es im Objektraum für die Messlichtbündel zu einer chromatischen Längsaufspaltung im Bereich $\Delta z\_$ c, wobei die Foki des langwelligen Lichts am Weitesten vom Messobjektiv 14 entfernt sind. Die Brennweite der Phasen-Zonenlinse 12 liegt für die mittlere Wellenlänge der Superlumineszenz-Diode 1 in der Größenordnung von 300 mm bis 500 mm. So kann eine Tiefenabtastung eines Zahnes 18 in der Größenordnung von ca. 10 mm erfolgen. Das an einem Punkt P des Zahnes 18 reflektierte Licht gelangt in das Messobjektiv 14. Dabei erfolgt hier die Transmission des Messlichtes an der Zonenlinse 12 wieder in der ersten Beugungsordnung. Das Referenzlicht wird an der Platte 15, an der Fläche 16 reflektiert, wo eine scharfe Abbildung der Punktlichtquellen besteht, und passiert wieder das Messobjektiv 14 und die Blende 13, die Zonenlinse 12 wieder in der nullten, aber auch in der ersten Beugungsordnung. Das in der nullten Beugungsordnung transmittierte Licht dient im weiteren zur Ausbildung der Referenzbilder auf der Detektor-Matrix 21. Referenzlicht und Messlicht werden am Strahlteiler 11 zumindest teilweise abgelenkt und gelangen über einen Dispersionsprismenkeil 19 und ein Fokussierobjektiv 20 auf die Detektor-Matrix 21. Auf dieser Detektor-Matrix 21 entsteht das Spektrum der Intensität über der Wellenlänge, welches die Information über die Tiefenposition des jeweils angemessenen Objektpunktes enthält.

Durch die mittels Referenzlicht abgebildeten Bilder der Punktlichtquellen, die mittels Pinhole-Array 9 erzeugt werden, ist es möglich, Submatrizen auf der Detektor-Matrix 21 numerisch abzustecken, in denen dann die Auswertung jeweils eines Spektrums von Messlicht bei der Messung eines Zahnes 18 erfolgt. Es wird dabei jeweils der spektrale Bereich mit der höchsten Intensität oder der Schwerpunkt der Intensitätsverteilung ermittelt, wobei auch Subpixel-Techniken eingesetzt werden können. Dargestellt ist hier beispielsweise die Submatrix j_k, beziehungsweise die Submatrix 21a sowie die Anordnung der Submatrizen 21b und 21c. Durch die Verdrehung sowohl von Mikrolinsen-Array 8 als auch des Pinhole-Arrays 9 um die optische Achse AO - also relativ zur Detektor-Matrix 21 - um einen spitzen Winkel $\alpha_n$ gemäß Gleichung (1) können bei nahezu vollständiger Ausnutzung der Fläche der Detektor-Matrix 21 rechteckige Submatrizen gebildet werden. Durch das Auffinden der mittels Referenzlicht bekannter Wellenlänge erzeugten Punktbilder, also Foki, aus denen hier die spektralen Referenzpunkte $P\lambda max$ und $P\lambda min$ subpixelgenau in einer jeden Submatrix errechnet werden, wird nicht nur deren Position auf der Detektor-Matrix 21 pixelgenau bestimmt, sondern auch die Änderung der Wellenlänge, also hochgenau die spektrale Sensitivität der Submatrix, also die spektrale Sensitivität lateral über die Pixel der Detektor-Matrix 21. Der Abstand der spektralen Referenzpunkte kann durch die Verzeichnung des Fokussierobjektivs 20 besonders im Randbereich des Messfeldes etwas variabel sein.

Bei der Vermessung eines Zahns 18 wird mittels Auswertung der Intensitätsverteilung des vom Zahn 18 reflektierten Lichts in jeder Submatrix 21a, 21b, 21c ... , beziehungsweise einer Submatrix j_k, wird die Tiefenposition eines jeden Objektpunktes a, b, c ... beziehungsweise eines Objektpunktes Pj_k in bekannter Art und Weise aus dem chromatisch konfokalen Signal rechnerisch bestimmt, so dass die Form des Zahnes 18 dreidimensional mit einer Messzeit entsprechend der Zeitdauer für die Aufnahme eines Kamera-Frames der Detektor-Matrix 21 bestimmt werden kann, was die Messfehler durch Verwackelungen erheblich verringern kann. Dabei kann die Zeitdauer der Signalauswertung wesentlich länger als die der Aufnahme sein.

Beim Messen des Objekts mittels Superlumineszenz-Diode 1 sind die schaltbaren Laserdioden 3 und 4 ausgeschaltet.

Am besten erfolgt das chromatische Kalibrieren mittels Referenzlicht, also mittels der Laserdioden 3 und 4, wenn sich kein Zahn 18 und auch kein anderes Objekt im Bereich der Messanordnung befindet, da dann auch kein unerwünschtes Licht von diesen Laserdioden 3 und 4 über den Zahn 18 oder ein Objekt auf die Detektor-Matrix 21 gelangen kann.

Bei einem weiteren Ausführungsbeispiel nach Figur 2 ist dem Strahlteiler 11 ein Tripelreflektor 23 mit einem Bandsperrfilter 22 direkt zugeordnet, der das Messlicht im Referenzstrahlengang weitgehend blockiert. Das am Strahlteiler 11 reflektierte Licht der Laserdiode 3 und der Laserdiode 4 dagegen passiert zumindest teilweise den Bandsperrfilter 22, wird am Tripelreflektor 23 reflektiert, passiert den Bandsperrfilter 22 ein zweites Mal und passiert den Strahlteiler 11 in Transmission, anschließend den Dispersionsprismenkeil 19 und wird mittels Fokussierobjektiv 20 auf die Detektor-Matrix 21 fokussiert, so dass dort scharf abgebildete Bilder mittels Referenzlicht von den Laserdioden 3 und 4 Punktlichtquellen zum chromatischen Kalibrieren entstehen. Zwei Bilder der Punktlichtquellen, also Foki, aus denen hier die spektralen Referenzpunkte $P\lambda max$ und $P\lambda min$ errechnet werden, stecken auf der Detektor-Matrix 21 jeweils eine Submatrix 21a (j_k), 21b, 21c ... numerisch ab. So kann die Orientierung der spektralen Achse hochgenau bestimmt werden.

Mittels der Submatrizen 21a, 21b, 21c -- wird nach dem Ausschalten der Laserdiode 3 und Laserdiode 4, das Messlicht, also die Superlumineszenz-Diode 1, eingeschaltet und der Messvorgang für den Zahn 18 gestartet.

Die Figur 3 zeigt ausschnittsweise die Anordnung für den Fall n=2, s. a. Gleichungen (1) und (2) sowie Beziehung (3), und die Ausbildung von Submatrizen als Spektralzellen mit den geometrischen Mittelpunkten M auf einer hochpixligen Detektor-Matrix 21. Der Winkel $\alpha_2$ beträgt hierbei $\alpha_2$=26,57 Altgrad und das Längen-Breiten-Verhältnis der Submatrizen $V_2$=5, wenn ein Füllgrad mit Submatrizen von 100% erreicht werden soll. Dabei liegt die Spektralachse, die $\lambda$-Achse, in der Zeichenebene und jeweils in horizontaler Richtung. Dies bedeutet, dass hierbei die lang gezogenen Spektralzellen, also die Submatrizen 21a, 21b, 21c ..., senkrecht zur realen oder gedachten, parallel projizierten Keilkante K' des Dispersionsprismenkeils 19 oder zu den Linien eines Beugungsgitters zur Spektralanalyse in der Zeichenebene orientiert sind. Die parallelen Geraden g'_k, g'_k+1, g'_k+2, welche spektrale Mittelpunkte M_j_k, M_j_k+1, M_j_k+2, ... direkt benachbarter Submatrizen verbinden, wobei sich die Mittelpunkte M_j_k, M_j_k+1, M_j_k+2, ... der Submatrizen jeweils aus den zugehörigen spektralen Referenzpunkte P$\lambda$max_j_k, P$\lambda$max_j_k+1, P$\lambda$max_j_k+2 und P$\lambda$min_j_k, P$\lambda$min_j_k+1, P$\lambda$min_j_k+2, ... errechnen, schließen also jeweils einen Winkel von $\alpha_2$=26,57 Altgrad mit den Längsachsen der zueinander parallelen Submatrizen ein. Außerdem ist in Figur 3 die mögliche Intensitätsverteilung in der mittleren Zeile zm einer Submatrix j_k mit einem Intensitätsmaximum dargestellt, dessen laterale Position benötigt wird, um die Tiefe des Objektpunktes, also dessen z-Koordinate - bei Kenntnis der geometrisch-optischen Daten der Anordnung - zu errechnen, während sich die lateralen Koordinaten dieses Objektpunktes aus der Position der Submatrix und den geometrisch-optischen Daten der Anordnung ergeben.

Die Figur 4 zeigt ausschnittsweise die Anordnung für den Fall n=4, s. a. Gleichungen (1) und (2), und die Ausbildung von Submatrizen j_k als Spektralzellen mit den geometrischen Mittelpunkten M auf einer hochpixligen Detektor-Matrix 21. Der Winkel $\alpha_4$ beträgt hierbei $\alpha_4$=14,04 Altgrad und das Längen-Breiten-Verhältnis der Submatrizen $V_4$ beträgt hierbei $V_4$=17, wenn ein Füllgrad mit Submatrizen von 100% erreicht werden soll.

Je kleiner der Winkel $\alpha_n$, desto lang gezogener die Submatrix und desto höher ist in der Regel die spektrale Auflösung und damit auch die Tiefenauflösung. Die Tiefenmessgenauigkeit in einem Objektpunkt kann sich mit höherer spektraler Auflösung jedoch nur verbessern, wenn die verfügbare Lichtenergie noch zur Aussteuerung der Detektor-Matrix 21 ausreicht.

In den Figuren 1 bis 4 wird davon ausgegangen, dass im dargestellten Ausschnitt der Detektor-Matrix 21 durch präzise Justierung der Anordnung die spektrale Achse jeweils exakt parallel zur Zeilenrichtung der Detektor-Matrix 21 orientiert ist.

**Patentansprüche**

1.  Verfahren zur robusten chromatisch-konfokalen Technik zur dreidimensionalen Messung der Objektform oder von Form und Lage eines oder mehrerer Objekte mit folgenden Komponenten in der Anordnung:

    Ein flächiges Array von polychromatischen Punktlichtquellen, welches mindestens eine vorgeordnete, polychromatische Lichtquelle (1) sowie auch mindestens eine passive, gerasterte Komponente (8, 9) aufweist, WObei die polychromatischen Punktlichtquellen eine Vielzahl von Lichtbündeln (B1 bis Bi) erzeugen, ein Strahlteiler (11), mindestens ein Element (12), dessen Brechkraft von der Wellenlänge abhängt, mindestens eine flächige Detektor-Matrix (21) im Detektionsstrahlengang, der Mittel zur lateralen spektralen Aufspaltung (19) und Mittel zur Fokussierung (20) auf die Detektor-Matrix (21) vorgeordnet sind, und ein Messobjektiv (14) zur Objektbeleuchtung und -aufnahme,
    **gekennzeichnet dadurch, dass** zur chromatischen Kalibrierung zumindest teilweise spektral definierte Referenzlichtbündel erzeugt werden, welche sich sowohl über mindestens eine passive gerasterte Komponente (8, 9) des flächigen Arrays als auch über einen Referenzstrahlengang ausbreiten und wieder in den Strahlengang, der zur Detektion führt, eingekoppelt werden und nach spektraler Aufspaltung zumindest näherungsweise fokussiert als Referenzpunktbilder auf die Detektor-Matrix (21) gelangen und mittels dieser Referenzpunktbilder lateral versetzte Submatrizen (21a, 21b, 21c) zur spektralen Analyse von Objektlicht auf der Detektor-Matrix (21) numerisch abgesteckt werden, die als Spektralzellen zur dreidimensionalen Messung der Objektform genutzt werden.

2.  Anordnung zur robusten chromatisch-konfokalen Technik zur dreidimensionalen Messung der Objektform oder von Form und Lage eines oder mehrerer Objekte mit folgenden Komponenten in der Anordnung: Ein flächiges Array von polychromatischen Punktlichtquellen, welches mindestens eine vorgeordnete, polychromatische Lichtquelle (1) sowie auch mindestens eine passive, gerasterte Komponente (8, 9) aufweist, wobei die polychromatischen Punktlichtquellen eine Vielzahl von Lichtbündeln (B1 bis Bi) erzeugen, ein Strahlteiler (11), mindestens ein Element (12), dessen Brechkraft von der Wellenlänge abhängt, mindestens eine flächige Detektor-Matrix (21) im Detektionsstrahlengang, der Mittel zur spektralen Aufspaltung (19) und Mittel zur Fokussierung (20) auf die Detektor-Matrix (21) vorgeordnet sind, so dass sich eine spektrale Achse entlang der lateralen spektralen Aufspaltung des Detektionsstrahlengangs zwischen dem Mittel zur spektralen Aufspaltung (19) und der Detektor Matrix (21) auf der flächigen Detektor-Matrix (21) ergibt, und ein Messobjektiv (14) zur Objektbeleuchtung und -aufnahme, **gekennzeichnet dadurch, dass** ein Referenzstrahlengang und mindestens ein schaltbares, zumindest teilweise spektral definiertes, vorbestimmten Referenzlichtbündel zur Kalibrierung der Anordnung angeordnet sind und dass das flächige Array dabei relativ verdreht um einen spitzen Winkel zur spektralen Achse auf der flächigen Detektor-Matrix (21) angeordnet ist, wobei die Drehung um die optische Achse (OA) der Anordnung ausgeführt ist, so dass eine Verbindungslinie von Punkt lichtquellen bei deren Projektion in die Ebene der Detektor-Matrix dort mit der spektralen Achse, der λ-Achse, einen spitzen Winkel einschließt.

3. Anordnung nach Anspruch 2, **dadurch gekennzeichnet, dass** das zumindest teilweise spektral definierte Referenzlichtbündel ein zumindest näherungsweise monochromatisches Spektrum aufweist.

4. Anordnung nach Anspruch 2, **dadurch gekennzeichnet, dass** das zumindest teilweise spektral definierte Referenzlichtbündel eine oder mehrere charakteristische, vorbestimmte Merkmale im Spektrum aufweist.

**Claims**

1. A method for achieving a robust, chromatic confocal technique for the three-dimensional measurement of the shape of an object or the shape and position of one or more objects, comprising the following components in the system:

   a 2-dimensional array of polychromatic point light sources, with at least one upstream polychromatic light source (1) as well as at least one passive rastered component (8, 9), the polychromatic point light sources being adapted to generate a multiplicity of light bundles (B1 to Bi), a beam splitter (11), at least one element (12) having a refractive power that is wavelength-dependent, at least one 2-dimensional detector matrix (21) in the path of the detection beam, upstream of which detector matrix means (19) for lateral spectral splitting and means (20) for focusing onto the detector matrix are disposed, and a measuring lens (14) for illuminating and imaging the object,

   **characterized in that** for chromatic calibration of the system at least partially spectrally defined reference light bundles are generated, which light bundles spread across at least one passive rastered component (8, 9) of the 2-dimensional array and propagate along a reference beam path and are again coupled into the beam path leading to the detection means, and, following spectral splitting, are at least approximately focused onto the detector matrix (21) as reference pinpoint images, by means of which laterally shifted sub-matrices (21a, 21b, 21c) are numerically defined on the detector matrix (21) for spectral analysis of the object light, which sub-matrices are implemented as spectral cells for three-dimensional measurement of the shape of the object.

2. A system for achieving a robust, chromatic confocal technique for the three-dimensional measurement of the shape of an object or the shape and position of one or more objects, comprising the following components in the system: a 2-dimensional array of polychromatic point light sources, comprising at least one upstream polychromatic light source (1) as well as at least one passive rastered component (8, 9), the polychromatic point light sources being adapted to generate a multiplicity of light bundles (B1 to Bi), a beam splitter (11), at least one element (12) having a refractive power that is wavelength-dependent, at least one 2-dimensional detector matrix (21) in the path of the detection beam, upstream of which detector matrix (21) means (19) for lateral spectral splitting and means (20) for focusing onto the detector matrix are disposed such that a spectral axis forms along the lateral spectral splitting of the detection beam path between the spectral splitting means (19) and the detector matrix (21) on the detector matrix (21) between said means (19) for lateral spectral splitting and said detector matrix (21), and a measuring objective (14) for illuminating and imaging the object, **characterized in that** a reference beam path and at least one switchable, at least partially spectrally defined, predetermined reference light bundle are provided for calibration of the system, and the 2-dimensional array is arranged in a position rotated through an acute angle relative to the spectral axis on said 2-dimensional detector matrix (21), said rotation being effected about the optical axis (OA) of the system such that a connecting line between point light sources upon projection onto the plane of the detector matrix forms there an acute angle with the λ-axis.

3. The system as defined in claim 2, **characterized in that** said at least partially spectrally predefined reference light bundle has an at least approximately monochromatic spectrum.

4. The system as defined in claim 2, **characterized in that** said at least partially spectrally predefined reference light bundle has one or more characteristic, predetermined features in its spectrum.

**Revendications**

1. Procédé pour une technique confocale chromatique de mesure en trois dimensions robuste de la forme d'objet ou de la forme et de la position d'un ou de plusieurs objets présentant les composants suivants dans l'agencement ci-dessous :

   un dispositif à deux dimensions de sources lumineuses ponctuelles polychromatiques, qui comporte au moins une source lumineuse (1) placée en amont et
   polychromatique ainsi qu'au moins un composant (8, 9) passif et tramé, les sources lumineuses ponctuelles polychromatiques générant une pluralité de faisceaux de lumière (B1 à Bi), un diviseur de faisceau (11), au moins un élément (12), dont la réfraction dépend de la longueur d'onde, au moins une matrice de détecteur (21) à deux dimensions dans la trajectoire de faisceau de détection, en amont duquel sont disposés des moyens pour la dissociation (19) spectrale latérale et des moyens pour la focalisation (20) sur la matrice de détecteur (21), et un objectif de mesure (14) pour l'éclairage et la prise de vue de l'objet,

   **caractérisé en ce que**, pour le calibrage chromatique, des faisceaux de lumière de référence définis au moins en partie au plan spectral sont générés, lesquels se propagent aussi bien sur au moins un composant (8, 9) passif et tramé du dispositif à deux dimensions que sur une trajectoire de faisceau de référence et sont injectés à nouveau dans la trajectoire du faisceau qui aboutit à la détection et arrivent sur la matrice de détecteur (21) après une dissociation spectrale, focalisée au moins approximativement sous forme d'images de point de référence, et des sous-matrices (21a, 21b, 21c) décalées latéralement sont tracées numériquement au moyen de ces images de point de référence pour l'analyse spectrale de lumière d'objet sur la matrice de détecteur (21), qui sont utilisées comme cellules spectrales pour la mesure en trois dimensions de la forme d'objet.

2. Agencement pour une technique confocale chromatique de mesure en trois dimensions robuste de la forme d'objet ou de la forme et de la position d'un ou de plusieurs objets avec les composants suivants dans l'agencement : un dispositif à deux dimensions de sources lumineuses ponctuelles polychromatiques, qui comporte au moins une source lumineuse (1) polychromatique placée en amont ainsi qu'également au moins un composant (8, 9) passif et tramé, les sources lumineuses ponctuelles polychromatiques générant une pluralité de faisceaux de lumière (B1 à Bi), un diviseur de faisceau (11), au moins un élément (12), dont le pouvoir réfringent dépend de la longueur d'onde, au moins une matrice de détecteur (21) à deux dimensions dans le trajet des rayons de détection, en amont de laquelle sont placés des moyens pour la dissociation (19) spectrale et des moyens pour la focalisation (20) sur la matrice de détecteur (21), de telle sorte qu'on obtient un axe spectral le long de la dissociation spectrale latérale du trajet de faisceau de détection entre le moyen pour la dissociation (19) spectrale et la matrice de détecteur (21) sur la matrice de détecteur (21) à deux dimensions, et un objectif de mesure (14) pour l'éclairage et la prise de vue de l'objet,
   **caractérisé en ce que**
   un trajet de faisceau de référence et au moins un faisceau de lumière de référence prédéfini, commutable, défini au moins en partie au plan spectral, sont disposés pour le calibrage de l'agencement et **en ce que** le dispositif à deux dimensions est disposé alors relativement décalé d'un angle aigu par rapport à l'axe spectral sur la matrice de détecteur (21) à deux dimensions, la rotation autour de l'axe (OA) optique de l'agencement étant réalisée de telle sorte qu'une ligne de liaison de sources lumineuses ponctuelles forme un angle aigu, lors de sa projection dans le plan de la matrice de détecteur, à cet endroit avec l'axe spectral, l'axe λ.

3. Agencement selon la revendication 2, **caractérisé en ce que** le faisceau lumineux de référence, défini au moins en partie au plan spectral, comporte un spectre au moins approximativement monochromatique.

4. Agencement selon la revendication 2, **caractérisé en ce que** le faisceau lumineux de référence, défini au moins en partie au plan spectral, comporte une ou plusieurs propriétés caractéristiques prédéfinies dans le spectre.

**Figur 1**

$z= \Delta z\_c \, (\Delta 1/\Delta 2)$

**Figur 2**

Figur3

Figur 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3013467 A
- GB 2144537 A
- DE 3428593 C2
- DE 10321885 A1

**In der Beschreibung aufgeführte Nicht-Patentliteratur**

- **H.J. Tiziani ; H.-M. Uhde.** Three-dimensional image sensing by chromatic confocal microscopy. *Applied Optics,* April 1994, vol. 33 (1), 1838-1843
- **A. K. Ruprecht ; K. Körner ; T.F. Wiesendanger ; H.J. Tiziani ; W. Osten.** Chromatic confocal detection for high speed micro-topography measurements. *Proceedings of SPIE,* 2004, vol. 5302-6, 53-60
- **J. Schmoll.** *Titel 3D-Spektrofotometrie extragalaktischer Emissionslinien,* Juni 2001, 12-13